# EUROPEAN PATENT APPLICATION

(11) **EP 4 596 405 A1**
(43) Date of publication of application: **06.08.2025**
(21) Application number: 24154936.9
(22) Date of filing: 31.01.2024
(51) Int. Cl.: B64D 11/04, B64D 13/06, B64D 11/00

(54) **AIRCRAFT GALLEY SYSTEM AND AIRCRAFT**

(71) Applicant: Airbus Operations GmbH, 21129 Hamburg (DE)
(72) Inventor: Reiss, Matthias, Hamburg (DE); Mortensen Ernits, Rafael, Hamburg (DE); Kempa, Michael Kempa Michael, Hamburg (DE)

(57) **Abstract**

Aircraft galley system (1, 1', 1"), comprising: a temperature adjusting loop (5), in which a heat exchanger fluid is circulated; a temperature adjusting unit (19, 19', 19") configured to cool the fluid in the temperature adjusting loop (5); and compartments (3) configured to be cooled by heat exchangers (17) supplied with the fluid from the temperature adjusting loop (5). Aircraft (25) with an aircraft galley (23) comprising the galley system (1, 1', 1").

## Description

### Technical Field

The invention relates to an aircraft galley system and an aircraft with an aircraft galley comprising the aircraft galley system.

### Background

A common aircraft galley comprises an aircraft galley structure including system interfaces, e.g. electric, cooling, water, wastewater, air ventilation. The cooling function is accomplished via a centralized cooling system, which generates cold air for trolley cooling.

Above the workdeck there are galley compartments with fully functional stand-alone electrical galley insert units, i.e. units that are fully operational regardless of whether they are installed inside the respective aircraft galley compartment or removed from the respective aircraft galley compartment. Such electrical galley insert units may be refrigerators, freezers, wine chillers etc. Each of these specific units has specific cooling requirements, e.g. selectable temperatures, a freezing temperature, etc., insulation grade requirements, e.g. refrigerator grade insulation or freezer grade insulation, and space requirements.

These specific units are heavy, costly, and - once installed in the respective aircraft galley compartment - part of the galley, whether needed or not.

### Summary

The problem to be solved is to improve the known aircraft galley system and aircraft with an aircraft galley comprising the aircraft galley system - in particular in terms of its efficient and cost-effective usefulness.

The problem is solved by the subject matter of the independent claim(s).

The problem underlaying the invention is particularly solved by the following technical teachings:
(1) Aircraft galley system, comprising: a temperature adjusting loop, in which a heat exchanger fluid is circulated; a temperature adjusting unit configured to cool the fluid in the temperature adjusting loop; and
   compartments configured to be cooled by heat exchangers supplied with the fluid from the temperature adjusting loop. Thereby, based on the already cool fluid in the temperature adjusting loop, a further individual cooling of a compartment is possible. For this purpose, the compartment, e.g. the walls and door of the compartment, may provide refrigerator grade insulation and/or freezer grade insulation.
(2) Aircraft galley system according to section (1), wherein the temperature adjusting unit is a pre-cooled compartment. This can be provided by a compartment filled with dry ice, for example. This solution is easy and cost-efficient.
(3) Aircraft galley system according to section (1) or (2), wherein the temperature adjusting unit is a trolley with an active cooling unit. Should the cooling unit of the trolley be insufficient for the cooling requirements or should the trolley malfunction, it can be replaced easily with another trolley.
(4) Aircraft galley system according to one of the preceding sections, wherein the temperature adjusting unit is a heat exchanger unit configured to be located adjacent to an aircraft fuselage. In cold weather on the ground and in any weather during the common travelling altitude, the ambient air may be sufficient to cool the fluid in the temperature adjusting loop. This solution also is easy and cost efficient.
(5) Aircraft galley system according to one of the preceding sections, wherein at least one heat exchanger is integrated in a back, side, bottom, top wall, or door of a compartment. This makes an improved use of the space occupied by the galley. Also, it allows one heat exchanger arranged between two adjacent compartments to cool both.
(6) Aircraft galley system according to one of the preceding sections, wherein at least one heat exchanger is located inside a compartment. This allows an easier maintenance and higher efficiency compared to the integrated solution.
(7) Aircraft galley system according to one of the preceding sections, wherein the temperature adjusting loop comprises ports configured to connect at least one heat exchanger to the temperature adjusting loop. Thereby, heat exchangers can only be placed in compartments, where they are needed. Also, an adjustable or optimized heat exchanger can be chosen, depending on the needs for a specific compartment.
(8) Aircraft galley system according to section (7), wherein the ports are configured to be accessible from the inside of the compartments. Thereby, heat exchangers can easily be added to or removed from compartments.
(9) Aircraft galley system according to one of the preceding sections,
   wherein the heat exchanger comprises a thermoelectrical device, such as a peltier element, attached to it and configured to increase the cooling effect of the fluid from the temperature adjusting loop. Thereby, starting from the temperature of the fluid entering the thermoelectrical device, the thermoelectrical device can increase or decrease the temperature of the fluid to better meet the temperature requirements of the respective compartment.
(10) Aircraft galley system according to one of the preceding sections, wherein at least one temperature sensor is provided in the at least one compartment, in the heat exchanger and/or in the temperature adjusting unit to control the fluid flow of the temperature adjusting loop. These sensors can help distribute the fluid and/or energy depending on the required temperature for each compartment.
(11) Aircraft with an aircraft galley comprising the aircraft galley system according to one of the preceding sections. Since weight is important in an aircraft, an aircraft with such an aircraft galley system can be made lighter and, therefore, more efficient.

### Brief Description of the Drawings

The foregoing summary, as well as the following detailed description, will be better understood when read in conjunction with the appended drawings. For the purposes of illustrating the present disclosure, preferred embodiments are shown in the drawings. It should be understood, however, that the invention is not limited to the specific embodiments disclosed, and reference is made to the claims for that purpose. In the drawings:
- Fig. 1: shows an aircraft galley system for adjusting the temperature in galley compartments in accordance with a first embodiment;
- Fig. 2: shows an aircraft galley system for adjusting the temperature in galley compartments in accordance with a second embodiment;
- Fig. 3: shows an aircraft galley system for adjusting the temperature in galley compartments in accordance with a third embodiment; and
- Fig. 4: shows an aircraft galley with the aircraft galley system in an aircraft.

### Detailed Description

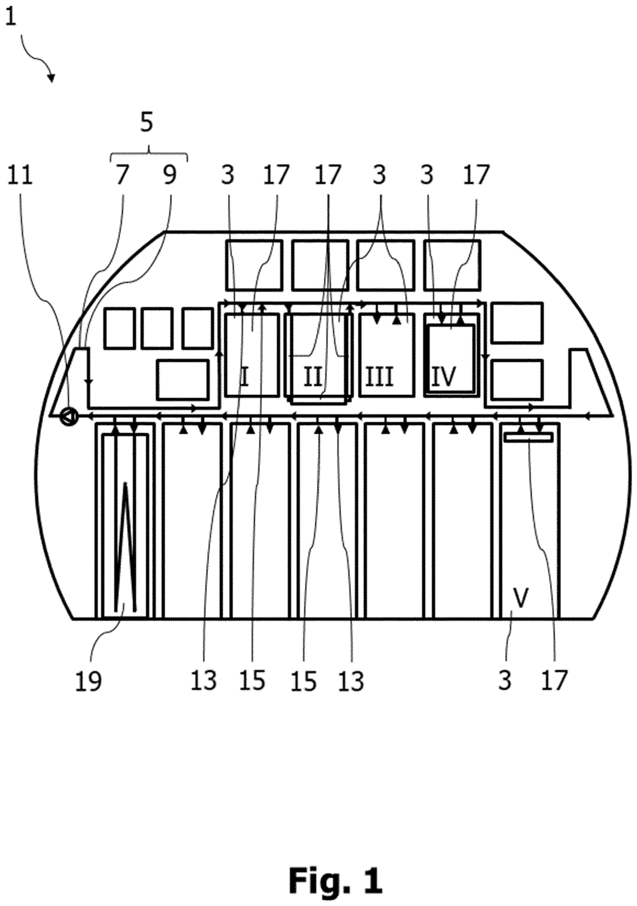

Fig. 1 shows an aircraft galley system 1 for adjusting the temperature in galley compartments 3 in accordance with a first embodiment.

In this embodiment, the aircraft galley system 1 comprises a temperature adjusting loop 5, in which a heat exchanger fluid is circulated. The temperature adjusting loop 5 comprises a fluid line, which may comprise a single line or two lines, e.g. a cool line 7 and a hot line 9, which in Fig. 1 extend in parallel in a plane orthogonal to the one shown in Fig. 1 and, therefore, are covered by each other. The fluid is circulated within the temperature adjusting loop 5 by means of a pump 11 in a clockwise direction in Fig. 1. The temperature adjusting loop 5 may be integrated in the galley, e.g. in the galley panels and/or in the galley workdeck and may further include a reservoir (not shown) for the fluid.

The temperature adjusting loop 5 comprises output ports 13 and input ports 15 for the fluid, which are arranged in and/or around galley compartments 3. Each of the ports 13, 15 can be opened and closed to allow fluid to be output from or input into the temperature adjusting loop 5.

The temperature adjusting loop 5 is connected or configured to be connected to heat exchangers 17 for adjusting the temperature in galley compartments 3. Here, the heat exchangers 17 are used for cooling compartments 3. A heat exchanger 17 may be directly connected to the temperature adjusting loop 5 (see I and II in Fig. 1) or indirectly connected to the temperature adjusting loop 5 (see IV and V in Fig. 1), e.g. via the ports 13, 15. Further, a heat exchanger 17 may be integrated in at least one of a back (see I in Fig. 1), side (see II in Fig. 1), bottom (see II in Fig. 1), top wall (not shown), or door (not shown) of a compartment 3. A specific form of integration may be that the respective heat exchanger 17 forms the entire respective wall or inner door surface of a compartment 3. This would allow an even more efficient temperature adjustment. Further, one heat exchanger 17 arranged between two adjacent compartments 3 may be configured to serve both compartments 3, i.e. cool both compartments 3. Alternatively or additionally, a heat exchanger 17 may be located inside a compartment 3 and removably connected to the temperature adjusting loop 5 (see IV and V in Fig. 1), e.g. via the ports 13, 15. In this case, the heat exchanger 17 may extend along at least one of a back (see IV in Fig. 1), side, bottom, top wall (see V in Fig. 1), or door of the compartment 3. The ports 13, 15 are accessible from the inside of the compartment 3 in that they extend into the compartment 3 (see IV and V in Fig. 1). However, the ports 13, 15 may be flush with one of the walls or the door of the compartment 3, or they may even be recessed within one of the aforementioned walls or the door of the compartment 3. The flush and the recessed configuration increase the space available within the compartment 3. The recessed configuration may further make connecting a heat exchanger 17 to the ports 13, 15 easier, since the recesses for the ports 13, 15 may help find the ports 13, 15 in the compartment 3. The walls and door of the compartment may provide refrigerator grade insulation and/or even freezer grade insulation.

In Fig. 1:
- I is a compartment 3, in which a heat exchanger 17 is integrated in the back wall of the compartment 3;
- II is a compartment 3, in which heat exchangers 17 are integrated in the side walls and in the bottom wall of the compartment 3; one or both of the heat exchangers 17 may be configured to also cool the adjacent compartment 3 denoted by I and III;
- III is a compartment 3 without any heat exchanger 17 but with the ports 13, 15 for connecting a heat exchanger 17; of course, the compartment 3 may have multiple such ports 13, 15 on different walls and/or the door for connecting multiple heat exchangers 17;
- IV is a compartment 3 like III with the difference that a heat exchanger 17 is arranged inside the compartment 3 and connected to the ports 13, 15, wherein the heat exchanger 17 extends along the back wall of the compartment 3; and
- V is a compartment 3 like IV with the difference that the compartment is larger and configured to receive an aircraft cabin trolley and that the heat exchanger 17 extends along the top wall of the compartment 3.

The heat exchanger 17 may be a skin heat exchanger or a flat heat pipe assembly. The skin heat exchanger can either directly cool the compartment 3, e.g. by means of a fan, or indirectly cool the compartment by means of a thermoelectrical device, e.g. a peltier element, attached to it. Thereby, starting from the temperature of the fluid entering the thermoelectrical device, the thermoelectrical device can even further increase or, in this case, decrease the temperature of the fluid to better meet the temperature requirements of the respective compartment 3. Further, at least one temperature sensor (not show) may be provided in the respective compartment 3, in the heat exchanger 17 and/or in the temperature adjusting unit 19 to control the fluid flow, e.g. the pump 11, of the temperature adjusting loop 5. The at least one temperature sensor may be connected to a control unit (not shown) configured to control the temperature inside each compartment 3 by controlling at least one of the pump 11, the fluid flow through the heat exchanger 17, e.g. varying the degree to which the ports 13, 15 are opened/closed, the speed of a fan of the heat exchanger 17, and/or the power and polarity of the thermoelectric device. The ports 13, 15 may have integrated communication ports so that not only fluid can be input into and output from the heat exchangers 17 but also communication signals between the heat exchangers 17 and the control unit.

The temperature of the fluid in the temperature adjusting loop 5 is controlled by a temperature adjusting unit 19. Here, the temperature adjusting unit 19 is configured as a heat sink, i.e. to cool the fluid circulating in the temperature adjusting loop 5. The ports 13, 15 may be configured to allow a quick connection and disconnection of the temperature adjusting unit 19 to the temperature adjusting loop 5, even within flights. For that a quick coupling may be used. The temperature adjusting unit 19 includes a heat exchanging unit, which is shown in a W-shape, to cool down the fluid in the temperature adjusting loop 5.

Here, the temperature adjusting unit 19 is a well-insulated pre-cooled compartment, that can be filled with dry ice, for example, prior to or at the beginning of a flight. As shown in Fig. 1, the temperature adjusting unit 19 may be fixedly connected to the galley. For example, it may be in a non-accessible area of the galley, wherein dry ice can be inserted into the dry ice compartment via a chute from outside of the galley. Alternatively, the dry ice compartment may be part of a trolley, which allows a quick change of one trolley that is no longer sufficiently pre-cooled, e.g. whose dry ice volume has decreased below a threshold, with another trolley that is sufficiently pre-cooled., e.g. whose dry ice volume is at or above a threshold. This solution covers the ground phase as well as the flight phase of on an aircraft.

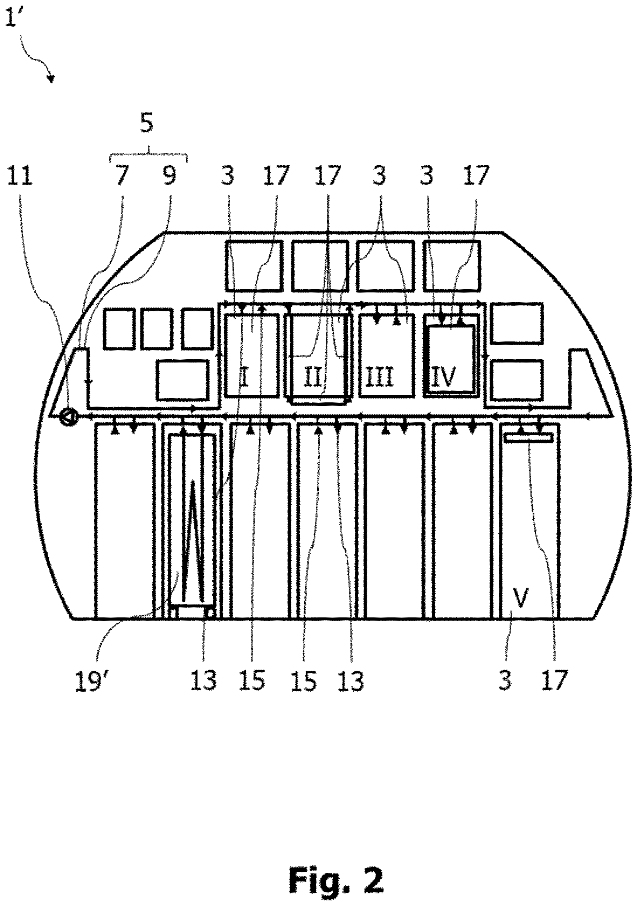

Fig. 2 shows an aircraft galley system 1' for adjusting the temperature in galley compartments 3 in accordance with a second embodiment. This second embodiment differs from the first embodiment in its temperature adjusting unit 19'. Here, the temperature adjusting unit 19' is a trolley with an active cooling function, e.g. with a vapor cycle, which is used as a ground support equipment and is only installed on ground to cover the pull down on ground. This solution covers the ground phase of on an aircraft.

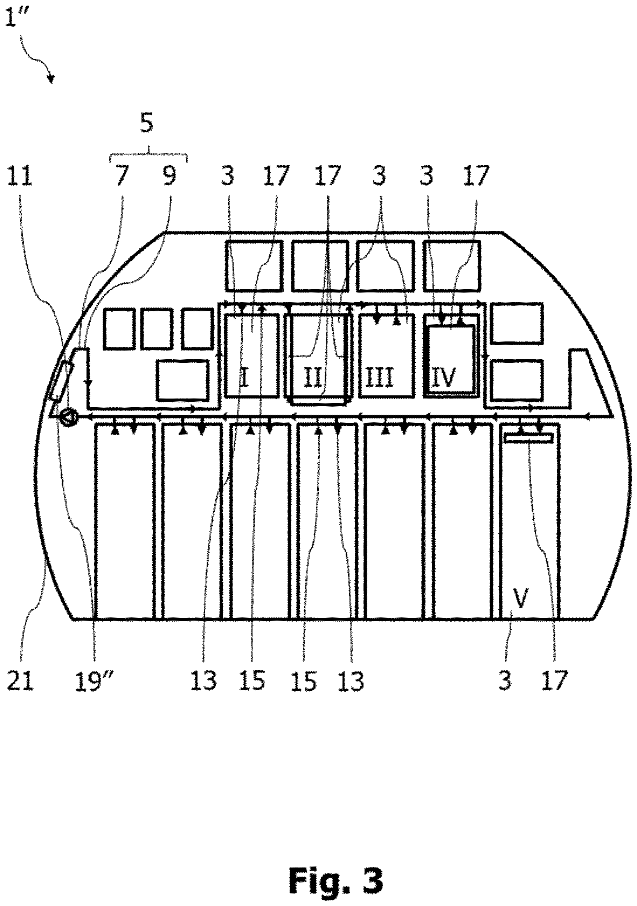

Fig. 3 shows an aircraft galley system 1" for adjusting the temperature in galley compartments 3 in accordance with a third embodiment. This third embodiment differs from the first and second embodiments in its temperature adjusting unit 19". Here, the temperature adjusting unit 19" is a heat exchanger unit located adjacent to an aircraft fuselage 21 to act as a heat sink in flight. This solution covers the flight phase of on an aircraft and can be combined with the previous solution to cover both, the ground phase as well as the flight phase of an aircraft.

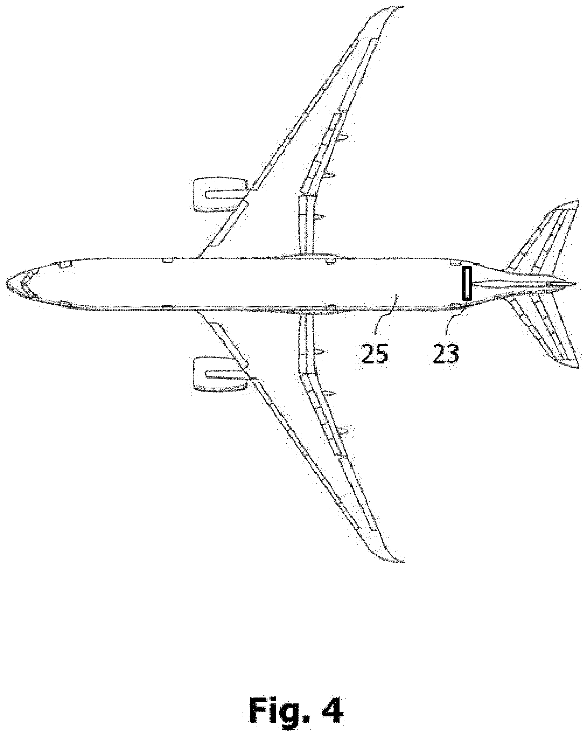

Fig. 4 shows an aircraft galley 23 with the aircraft galley system 1, 1', 1" in an aircraft 25.

The embodiments offer at least one of the following advantages:
- decreased weight;
- decreased number of parts;
- improved galley design, e.g. with less walls;
- decreased costs;
- higher reliability;
- increased space efficiency; and
- higher flexibility for customization.

## Claims

1. Aircraft galley system (1, 1', 1"), comprising:
a temperature adjusting loop (5), in which a heat exchanger fluid is circulated;
a temperature adjusting unit (19, 19', 19") configured to cool the fluid in the temperature adjusting loop (5); and
compartments (3) configured to be cooled by heat exchangers (17) supplied with the fluid from the temperature adjusting loop (5).

2. Aircraft galley system (1) according to claim 1,
wherein the temperature adjusting unit (19) is a pre-cooled compartment.

3. Aircraft galley system (1') according to claim 1 or 2,
wherein the temperature adjusting unit (19') is a trolley with an active cooling unit.

4. Aircraft galley system (1") according to one of the preceding claims,
wherein the temperature adjusting unit (19") is a heat exchanger unit configured to be located adjacent to an aircraft fuselage (21).

5. Aircraft galley system (1, 1', 1") according to one of the preceding claims,
wherein at least one heat exchanger (17) is integrated in a back, side, bottom, top wall, or door of a compartment (3).

6. Aircraft galley system (1, 1', 1") according to one of the preceding claims,
wherein at least one heat exchanger (17) is located inside a compartment (3).

7. Aircraft galley system (1, 1', 1") according to one of the preceding claims,
wherein the temperature adjusting loop (5) comprises ports (13, 15) configured to connect at least one heat exchanger (17) to the temperature adjusting loop (5).

8. Aircraft galley system (1, 1', 1") according to claim 7,
wherein the ports (13, 15) are configured to be accessible from the inside of the compartments (3).

9. Aircraft galley system (1, 1', 1") according to one of the preceding claims,
wherein the heat exchanger (17) comprises a thermoelectrical device, such as a peltier element, attached to it and configured to increase the cooling effect of the fluid from the temperature adjusting loop (5).

10. Aircraft galley system (1, 1', 1") according to one of the preceding claims,
wherein at least one temperature sensor is provided in the at least one compartment (3), in the heat exchanger (17) and/or in the temperature adjusting unit (19, 19', 19") to control the fluid flow of the temperature adjusting loop (5).

11. Aircraft (25) with an aircraft galley (23) comprising the aircraft galley system (1, 1', 1") according to one of the preceding claims.
